# EUROPEAN PATENT APPLICATION

(11) **EP 4 366 211 A1**
(43) Date of publication of application: **08.05.2024**
(21) Application number: 22832063.6
(22) Date of filing: 28.06.2022
(51) Int. Cl.: H04L 5/00

(54) **TRANSMISSION PROCESSING METHOD, TERMINAL, AND NETWORK DEVICE**

(30) Priority: 30.06.2021 CN 202110736806
(71) Applicant: Vivo Mobile Communication Co., Ltd., Dongguan, Guangdong 523863 (CN)
(72) Inventor: LI, Dongru, Dongguan, Guangdong 523863 (CN); ZENG, Chaojun, Dongguan, Guangdong 523863 (CN); CHEN, Xiaohang, Dongguan, Guangdong 523863 (CN); SUN, Xiaodong, Dongguan, Guangdong 523863 (CN)
(74) Representative: Murgitroyd & Company
(86) International application number: PCT/CN2022/102007
(87) International publication number: WO 2023/274250

(57) **Abstract**

This application discloses a transmission processing method, a terminal, and a network device, and belongs to the field of wireless communications technologies. The transmission processing method in embodiments of this application includes: in a non-physical downlink control channel PDCCH monitoring period, monitoring, by a terminal, a first indication on at least one target channel or signal monitoring occasion; and performing, by the terminal, a predetermined behavior based on the first indication, where the predetermined behavior includes at least one of monitoring the target channel or signal monitoring occasion, monitoring a PDCCH, measuring a channel state information-reference signal CSI-RS, and reporting CSI.

## Description

### CROSS-REFERENCE TO RELATED APPLICATION

The present invention claims priority to Chinese Patent Application No. 202110736806.7, filed with the China National Intellectual Property Administration on June 30, 2021 and entitled "TRANSMISSION PROCESSING METHOD, TERMINAL, AND NETWORK DEVICE", which is incorporated herein by reference in its entirety.

### TECHNICAL FIELD

This application belongs to the field of wireless communications technologies, and specifically, relates to a transmission processing method, a terminal, and a network device.

### BACKGROUND

Service packets of some communications services, for example, an extended reality (Extended Reality, XR) service, need to undergo processes such as data compression and rendering on a server side, resulting in a jitter in actual arrival time of the service packets at a network side. The jitter may be understood as an offset within a specific relative to and before or after ideal time of periodic arrival at a position.

To cope with a potential delay caused by service packet jitter, monitoring duration for physical downlink control channel (Physical downlink control channel, PDCCH) can be increased to enable a network to promptly notify a terminal of data reception. However, power consumption of the terminal increases with its monitoring duration for PDCCH.

### SUMMARY

Embodiments of this application provide a transmission processing method, a terminal, and a network device, to improve flexibility of signal/channel monitoring and detection by a terminal, reduce power consumption of the terminal, and ensure communication performance.

According to a first aspect, a transmission processing method is provided, including: in a non-PDCCH monitoring period, monitoring, by a terminal, a first indication on at least one target channel or signal monitoring occasion; and performing, by the terminal, a predetermined behavior based on the first indication, where the predetermined behavior includes at least one of monitoring the target channel or signal monitoring occasion, monitoring a PDCCH, measuring a CSI-RS, and reporting CSI.

According to a second aspect, a transmission processing method is provided, including: transmitting, by a network device, a first indication on at least one target channel or signal monitoring occasion, where the first indication is used to indicate a terminal to perform a predetermined behavior, and the predetermined behavior includes at least one of monitoring the target channel or signal monitoring occasion, monitoring a PDCCH, measuring a CSI-RS, and reporting CSI.

According to a third aspect, a transmission processing apparatus is provided, and is applied to a terminal, where the apparatus includes: a monitoring module, configured to: in a non-PDCCH monitoring period, monitor, for the terminal, a first indication on at least one target channel or signal monitoring occasion; and an execution module, configured to perform a predetermined behavior based on the first indication, where the predetermined behavior includes at least one of monitoring a target channel or signal monitoring occasion, monitoring a physical downlink control channel PDCCH, measuring a channel state information-reference signal CSI-RS, and reporting CSI.

According to a fourth aspect, a transmission processing apparatus is provided, and is applied to a network device, where the apparatus includes: a transmitting module, configured to transmit a first indication on at least one target channel or signal monitoring occasion, where the first indication is used to indicate a terminal to perform a predetermined behavior, and the predetermined behavior includes at least one of monitoring the target channel or signal monitoring occasion, monitoring a PDCCH, measuring a CSI-RS, and reporting CSI.

According to a fifth aspect, a terminal is provided, where the terminal includes a processor, a memory, and a program or instructions stored in the memory and executable on the processor, and when the program or instructions are executed by the processor, the steps of the method according to the first aspect are implemented.

According to a sixth aspect, a terminal is provided, including a processor and a communications interface, where the communications interface is coupled to the processor, and the processor is configured to run a program or instructions, to implement the steps of the method according to the first aspect.

According to a seventh aspect, a network device is provided, where the network device includes a processor, a memory, and a program or instructions stored in the memory and executable on the processor, and when the program or instructions are executed by the processor, the steps of the method according to the second aspect are implemented.

According to an eighth aspect, a network device is provided, including a processor and a communications interface, where the communications interface is coupled to the processor, and the processor is configured to run a program or instructions, to implement the steps of the method according to the second aspect.

According to a ninth aspect, a readable storage medium is provided, where the readable storage medium stores a program or instructions, and when the program or instructions are executed by a processor, the steps of the method according to the first aspect are implemented, or the steps of the method according to the second aspect are implemented.

According to a tenth aspect, a chip is provided, where the chip includes a processor and a communications interface, the communications interface is coupled to the processor, and the processor is configured to run a program or instructions, to implement the steps of the method according to the first aspect, or implement the steps of the method according to the second aspect.

According to an eleventh aspect, a computer program product or program product is provided, where the computer program or program product is stored in a storage medium, and the program or program product is executed by at least one processor, to implement the steps of the method according to the first aspect, or implement the steps of the method according to the second aspect.

In the embodiments of this application, in a non-PDCCH monitoring period, a terminal monitors a first indication on at least one target channel or signal monitoring occasion, and performs a predetermined behavior based on the first indication, where the predetermined behavior includes at least one of monitoring the target channel or signal monitoring occasion, monitoring a PDCCH, measuring a CSI-RS, and reporting CSI. In this way, the terminal can flexibly implement behaviors such as monitoring and measurement based on the first indication, thereby reducing power consumption of the terminal and ensuring wireless communication performance.

### BRIEF DESCRIPTION OF DRAWINGS

FIG. 1 is a schematic structural diagram of a wireless communications system according to an example embodiment of this application;
FIG. 2 is a schematic flowchart of a transmission processing method according to an example embodiment of this application;
FIG. 3 is a schematic flowchart of a transmission processing method according to another example embodiment of this application;
FIG. 4a is a schematic diagram of a relationship between a second monitoring time window and a first monitoring time window according to an example embodiment of this application;
FIG. 4b to FIG. 4d are schematic diagrams of several different monitoring windows according to an example embodiment of this application;
FIG. 5 is a schematic flowchart of a transmission processing method according to another example embodiment of this application;
FIG. 6 is a schematic structural diagram of a transmission processing apparatus according to an example embodiment of this application;
FIG. 7 is a schematic structural diagram of a transmission processing apparatus according to another example embodiment of this application;
FIG. 8 is a schematic structural diagram of a terminal according to an example embodiment of this application; and
FIG. 9 is a schematic structural diagram of a network device according to an example embodiment of this application.

### DESCRIPTION OF EMBODIMENTS

The following clearly describes the technical solutions in the embodiments of this application with reference to the accompanying drawings in the embodiments of this application. Clearly, the described embodiments are some but not all of the embodiments of this application. All other embodiments obtained by persons of ordinary skill in the art based on the embodiments of this application shall fall within the protection scope of this application.

The terms "first", "second", and the like in the specification and claims of this application are used to distinguish between similar objects, but not to indicate a specific order or sequence. It should be understood that the terms used in this way are interchangeable in appropriate circumstances, so that the embodiments of this application can be implemented in an order other than the order illustrated or described herein. In addition, the objects distinguished by "first" and "second" usually belong to one category, and the number of objects is not limited. For example, there may be one or more first objects. In addition, in the specification and claims, "and/or" represents at least one of connected objects, and the character "/" typically represents an "or" relationship between the associated objects.

It should be noted that the technologies described in the embodiments of this application are not limited to a long term evolution (Long Term Evolution, LTE)/LTE-advanced (LTE-Advanced, LTE-A) system, and may be further used in other wireless communications systems, such as code division multiple access (Code Division Multiple Access, CDMA), time division multiple access (Time Division Multiple Access, TDMA), frequency division multiple access (Frequency Division Multiple Access, FDMA), orthogonal frequency division multiple access (Orthogonal Frequency Division Multiple Access, OFDMA), single-carrier frequency-division multiple access (Single-carrier Frequency-Division Multiple Access, SC-FDMA), and other systems. The terms "system" and "network" in the embodiments of this application are usually used interchangeably. The described technologies may be used in the aforementioned systems and radio technologies, and may also be used in other systems and radio technologies. In the following descriptions, a new radio (New Radio, NR) system is described for an illustration purpose, and NR terms are used in most of the following descriptions, but these technologies may also be applied to applications other than an NR system application, for example, a 6-th generation (6-th Generation, 6G) communications system.

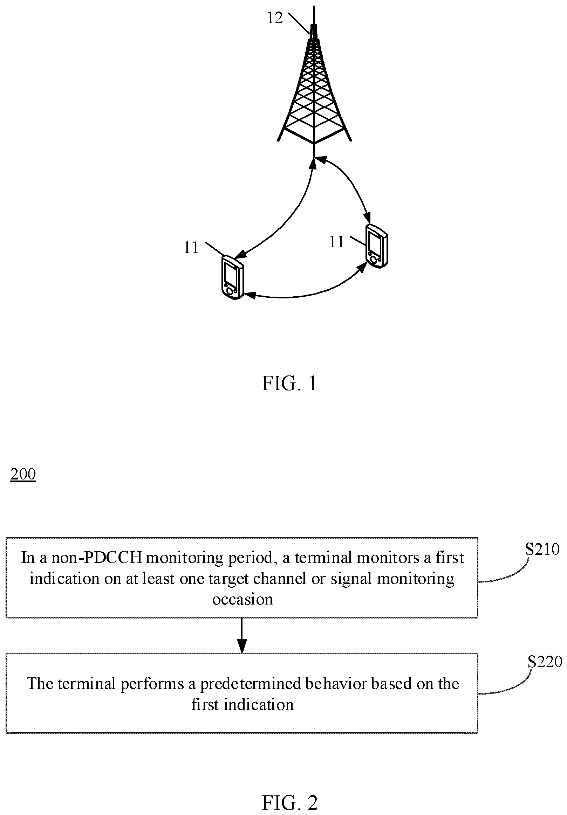

FIG. 1 is a schematic structural diagram of a wireless communications system to which an embodiment of this application is applicable. The wireless communications system includes a terminal 11 and a network device 12. The terminal 11 may also be referred to as a terminal device or user equipment (User Equipment, UE). The terminal 11 may be a terminal side device such as a mobile phone, a tablet personal computer (Tablet Personal Computer), a laptop computer (Laptop Computer) or referred to as a notebook computer, a personal digital assistant (Personal Digital Assistant, PDA), a palmtop computer, a netbook, an ultra-mobile personal computer (ultra-mobile personal computer, UMPC), a mobile Internet device (Mobile Internet Device, MID), a wearable device (Wearable Device), vehicle user equipment (VUE), or pedestrian user equipment (PUE). The wearable device includes a smartwatch, a band, a headset, glasses, or the like. It should be noted that a specific type of the terminal 11 is not limited in the embodiments of this application. The network device 12 may be a base station or a core network. The base station may be referred to as a NodeB, an evolved NodeB, an access point, a base transceiver station (Base Transceiver Station, BTS), a radio base station, a radio transceiver, a basic service set (Basic Service Set, BSS), an extended service set (Extended Service Set, ESS), a NodeB, an evolved NodeB (eNB), a home NodeB, a home evolved NodeB, a WLAN access point, a Wi-Fi node, a transmitting monitoring point (Transmitting Receiving Point, TRP), or another appropriate term in the art. Provided that the same technical effect is achieved, the base station is not limited to a specific technical term. It should be noted that the base station in the NR system is only used as an example in the embodiments of this application, but a specific type of the base station is not limited.

The following describes in detail the technical solutions provided in the embodiments of this application with reference to the accompanying drawings and by using some embodiments and application scenarios thereof.

FIG. 2 is a schematic flowchart of a transmission processing method 200 according to an example embodiment of this application. The method 200 may be performed by a terminal but is not limited thereto, and may be specifically performed by hardware and/or software installed in the terminal. In this embodiment, the method 200 may include at least the following steps.

S210: In a non-PDCCH monitoring period, the terminal monitors a first indication on at least one target channel or signal monitoring occasion.

The non-PDCCH monitoring period is duration within which no PDCCH is monitored. For example, in a case that a network configures discontinuous reception (Discontinuous Reception, DRX), the duration within which no PDCCH is monitored is duration outside DRX active time, and/or network-defined duration within which no PDCCH is monitored.

In addition, a possibility that the network may configure the target channel or signal monitoring time within the PDCCH monitoring period is not excluded, or a possibility that a target channel or signal falls within the PDCCH monitoring period is not excluded, except that the terminal does not monitor the target channel or signal in a case that the target channel or signal falls within the PDCCH monitoring period (that is, in the foregoing two cases).

The target channel or signal monitoring occasion may be a wake-up signal monitoring occasion (Wake Up Signal Monitoring Occasion, WUS MO), namely, a monitoring occasion for monitoring a wake-up signal. The target channel or signal monitoring occasion may alternatively be a dedicated monitoring occasion for the first indication, namely, a monitoring occasion for monitoring the first indication. The target channel or signal monitoring occasion may alternatively be a monitoring occasion for a wake-up signal and the first indication, meaning that the terminal may monitor both the wake-up signal and the first indication on that monitoring occasion. This is not limited.

The first indication may be transmitted by a network device to indicate a plurality of types of different information to the terminal. For example, the first indication may be used to indicate whether the terminal can perform a predetermined behavior in subsequent S220, or duration, start time, end time, and the like of performing the predetermined behavior by the terminal. In this way, the terminal can flexibly implement behaviors such as monitoring and measurement based on the first indication, to avoid high power consumption of the terminal caused by unnecessary monitoring on a target channel or signal monitoring occasion or a PDCCH.

In an implementation, the first indication may be carried in a PDCCH or a sequence. For example, the first indication may be carried in downlink control information (Downlink Control Information, DCI) 2-6, or may be designed independently of DCI 2-6, for example, may be carried in other DCI or a sequence.

It should be noted that in this embodiment, content of first indications detected by the terminal on different target channel or signal monitoring occasions may be the same or different, that is, content of first indications transmitted by the network device on different target channel or signal monitoring occasions may be the same or different.

S220: The terminal performs a predetermined behavior based on the first indication.

The predetermined behavior includes at least one of monitoring the target channel or signal monitoring occasion, monitoring a PDCCH, measuring a channel state information-reference signal (Channel State Information Reference Signal, CSI-RS), and reporting CSI.

In this embodiment, in a non-PDCCH monitoring period, the terminal monitors a first indication on at least one target channel or signal monitoring occasion, and performs, based on a detected first indication, a predetermined behavior, for example, monitoring the target channel or signal monitoring occasion, monitoring a PDCCH, measuring a CSI-RS, and reporting CSI. In this way, the terminal can flexibly implement behaviors such as monitoring and measurement, to reduce power consumption of the terminal and ensure wireless communication performance.

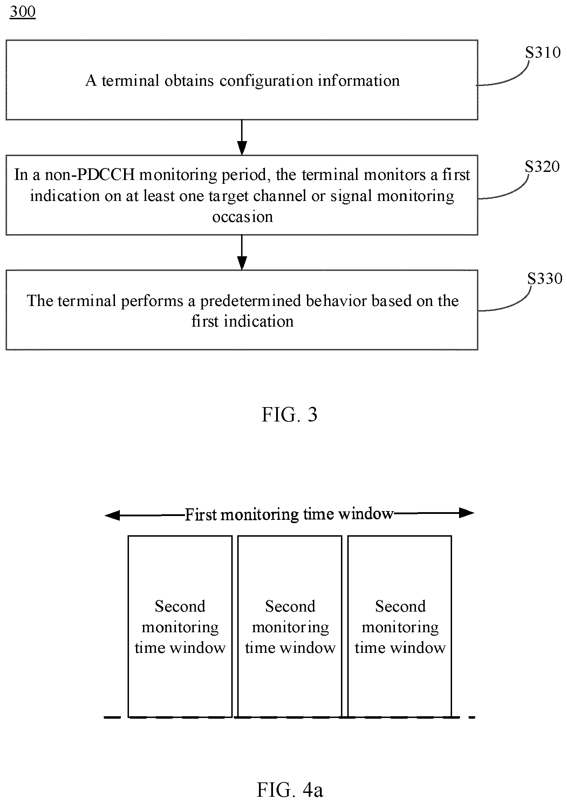

FIG. 3 is a schematic flowchart of a transmission processing method 300 according to an example embodiment of this application. The method 300 may be performed by a terminal but is not limited thereto, and may be specifically performed by hardware and/or software installed in the terminal. In this embodiment, the method 300 may include at least the following steps.

S310: The terminal obtains configuration information.

The configuration information may be agreed upon in a protocol, configured by using higher layer signaling, or configured by a network device. For example, in a possible implementation, the configuration information may be configured by the network device for the terminal based on at least one of a service cycle, a jitter range (jitter range) of a service packet, a DRX cycle, a DRX start moment, and DRX on-duration.

In this case, the configuration information in this embodiment may be used to configure at least one of the following (1) to (4).

### (1) A first monitoring time window (Time Window)

Configuration of the first monitoring time window is related to at least one of a service cycle, a jitter range of a service packet, a DRX cycle, a DRX start moment, and DRX on-duration.

In this embodiment, the service cycle may be, but is not limited to, a service cycle of an XR service.

The jitter range of a service packet may be understood as a time range (which may also be understood as a time deviation range) of an arrival moment of an XR service packet at the network device relative to an ideal arrival moment of the service packet at the network device, and a jitter value of the service packet may be predicted by the network device based on a historical service jitter value.

It can be understood that the XR service is used as an example, and the XR service is a quasi-periodic service, to be specific, service packets arrive at equal intervals, and an interval is a small floating-point number (a non-positive integer). When a jitter of time (or an offset of time) at which an XR service packet arrives at a base station side conforms to a truncated Gaussian distribution, for example, a jitter range of the XR service may be ±4 ms, to be specific, when the XR service packet arrives at the base station side quasi-periodically at time n (for example, in the unit of ms), actual arrival time of the service packet is n+j due to existence of a jitter, where j is a value of the jitter. For example, if the jitter is -1 ms, actual arrival time of a packet that should arrive at time n is n-1 ms.

In an implementation, a length of the first monitoring time window may be the same as the jitter range of a service packet. For example, if the jitter range is ±4 ms, the length of the first monitoring time window may be 8 ms.

In addition, the first monitoring time window may be a periodic time window, and a cycle of the first monitoring time window may be related to a DRX cycle and/or a service cycle. For example, the cycle of the first monitoring time window is the same as the service cycle. To be specific, if the service cycle is 16.67 ms, the cycle of the first time window is also 16.67 ms.

(2) At least one target channel or signal monitoring occasion, where the at least one target channel or signal monitoring occasion is configured within the first monitoring time window. In other words, the at least one target channel or signal monitoring occasion may be configured within the first monitoring time window.

In an implementation, before monitoring a first indication on the at least one target channel or signal monitoring occasion, the terminal may further receive activation information for the target channel or signal monitoring occasion. The activation information is used to activate all or some target channels of the at least one target channel, or may be used to activate all or some target channels of the at least one signal monitoring occasion, or may be used to activate all or some target channels of the at least one target channel and all or some target channels of the at least one signal monitoring occasion.

(3) A type of at least one target channel or signal monitoring occasion, where different types of the at least one target channel or signal monitoring occasion are associated with different service types, and/or different types of the at least one target channel or signal monitoring occasion are associated with different predetermined behaviors

For example, assuming that the target channel or signal monitoring occasion is WUS MOs and types of the WUS MOs include A and B, a type-A WUS MO may be associated with an XR service, and a type-B WUS MO may be associated with a virtual reality (Virtual Reality, VR) livestreaming service; or a type-A WUS MO may be associated with WUS MO monitoring, and a type-B WUS MO may be associated with PDCCH monitoring, or the like. This is not limited.

(4) At least one second monitoring time window, where the at least one second monitoring time window is configured within the first monitoring time window

In an implementation, the terminal monitors a PDCCH within the second monitoring time window.

In another implementation, in a case that a network configures DRX, the second monitoring time window may be DRX on-duration.

In another implementation, the first indication may indicate whether the terminal is to monitor a PDCCH within some or all of the at least one second monitoring time window, and/or indicate whether the terminal is to monitor a target channel or signal monitoring occasion within some or all of the at least one second monitoring time window.

As shown in FIG. 4a, the second monitoring time windows may be periodic time windows. A gap between second monitoring time windows may be configured by a network side. For example, each second monitoring time window and a gap constitute a cycle. The terminal monitors a PDCCH within the second monitoring time window, and does not monitor a PDCCH in the gap.

In another embodiment, if the terminal detects a PDCCH within a second monitoring time window A, the terminal may ignore another second monitoring time window B after the second monitoring time window A, and keeps on the PDCCH monitoring (this may also be understood as that the terminal skips the subsequent second monitoring time window B after detecting the PDCCH within the second monitoring time window A).

Certainly, if the terminal is configured with a DRX configuration, the second monitoring time window B is also automatically overridden by DRX on-duration due to the presence of an inactivity timer.

It should be noted that, in the foregoing PDCCH monitoring process, PDCCH monitoring may be stopped after the inactivity timer expires, or PDCCH monitoring is stopped when a PDCCH skipping indication is received. The PDCCH skipping indication may be transmitted using DCI.

In addition, in this embodiment, within a first monitoring time window, only a target channel or signal monitoring occasion may be configured, or only a PDCCH MO may be configured, or both a target channel or signal monitoring occasion and a PDCCH MO may be configured. This is not limited.

S320: In a non-PDCCH monitoring period, the terminal monitors a first indication on at least one target channel or signal monitoring occasion.

It can be understood that for an implementation process of S320, reference may be made to related descriptions in the method embodiment 200. In addition, in a possible implementation of this embodiment, because actual time at which an XR service packet (frame) arrives at the network device has a jitter, the network device may predict the jitter and use the first indication to indicate the terminal to skip monitoring some target channel or signal monitoring occasions to reduce power consumption of the terminal. In this case, content indicated by the first indication or information carried in the first indication in this embodiment may be related to, but is not limited to, at least one of a service cycle, a jitter range of a service packet, a DRX cycle, a DRX start moment, and DRX on-duration, and the first indication may be used to indicate at least one of the following (1) to (15).

### (1) First duration

The first duration may be as follows: The terminal may skip monitoring the target channel or signal monitoring occasion within the first duration, and/or the terminal may skip monitoring a PDCCH within the first duration.

In an implementation, different first duration may be indicated by different specific values carried in the first indication. For example, "00" may indicate that first duration is 2 ms, "01" may indicate that first duration is 4 ms, and "10" may indicate that first duration is 6 ms. This is not limited.

In this embodiment, the "skipping monitoring" may be understood as not monitoring, canceling monitoring, prohibiting monitoring, or the like.

(2) N target channel or signal monitoring occasions that the terminal does not monitor, where N is an integer greater than or equal to 0

The N target channel or signal monitoring occasions may be N target channel or signal monitoring occasions after a first moment. The first moment may be a moment at which the terminal completes reception of the first indication, or the first moment may be an end moment of a target channel or signal monitoring occasion on which the terminal completes reception of the first indication. This is not limited.

(3) A target channel or signal monitoring occasion that the terminal needs to monitor

The first indication may indicate an index, a type, a time length, or the like of the target channel or signal monitoring occasion that the terminal needs to monitor, so as to indicate the target channel or signal monitoring occasion that the terminal needs to monitor.

(4) Whether the terminal is to be woken up for PDCCH monitoring

A specific value of the first indication may be used to indicate whether the terminal is to be woken up. For example, if "1" indicates that the terminal is not to be woken up and "0" indicates that the terminal is to be woken up, in a case that "1" is carried in the first indication, the terminal does not monitor a PDCCH; or in a case that "0" is carried in the first indication, the terminal monitors a PDCCH.

(5) A start moment of monitoring a PDCCH by the terminal

A time offset or certain time relative to a currently monitored target channel or signal monitoring occasion may be indicated, to indicate the start moment of monitoring a PDCCH by the terminal. This is not limited herein.

(6) An end moment of monitoring a PDCCH by the terminal

Similar to that in (5), a time offset or certain time relative to a currently monitored target channel or signal monitoring occasion may be indicated, to indicate the end moment of monitoring a PDCCH by the terminal. This is not limited herein.

(7) Duration of monitoring a PDCCH by the terminal

For example, the duration of monitoring a PDCCH by the terminal may be indicated by the first indication. This is not limited.

(8) Whether the terminal is to receive a CSI-RS

Whether the terminal is to receive a CSI-RS may be indicated by the first indication.

(9) A start moment of receiving the CSI-RS by the terminal

Similar to that in (5), a time offset or certain time relative to a currently monitored target channel or signal monitoring occasion may be indicated, to indicate the start moment of receiving the CSI-RS by the terminal. This is not limited herein.

(10) An end moment of receiving the CSI-RS by the terminal

Similar to the foregoing content, a time offset or certain time relative to a currently monitored target channel or signal monitoring occasion may be indicated, to indicate the end moment of receiving the CSI-RS by the terminal. This is not limited herein.

(11) Duration of receiving the CSI-RS by the terminal

Similar to that in (1), the duration of receiving the CSI-RS by the terminal may also be indicated by a specific value carried in the first indication. This is not limited.

(12) Whether the terminal is to report CSI

(13) A start moment of reporting the CSI by the terminal

(14) An end moment of reporting the CSI by the terminal

(15) Duration of reporting the CSI by the terminal

For the start moment, end moment, and duration of reporting the CSI by the terminal, whether the terminal is to report CSI, and the like in (12) to (15), refer to related descriptions of receiving a CSI-RS by the terminal in (8) to (11). To avoid repetition, details are not described herein again.

Correspondingly, in another possible implementation of this embodiment, at least one of the following first information to fifteenth information may alternatively be carried in the first indication to indicate the foregoing (1) to (15). For example, at least one of the following first information to fifteenth information may be carried in the first indication.

The first information is used to indicate the first duration.

The second information is used to indicate the N target channel or signal monitoring occasions that the terminal does not monitor, where N is an integer greater than or equal to 0.

The third information is used to indicate the target channel or signal monitoring occasion that the terminal needs to monitor.

The fourth information is used to indicate whether the terminal is to be woken up for PDCCH monitoring.

The fifth information is used to indicate the start moment of monitoring a PDCCH by the terminal.

The sixth information is used to indicate the end moment of monitoring a PDCCH by the terminal.

The seventh information is used to indicate the duration of monitoring a PDCCH by the terminal.

The eighth information is used to indicate whether the terminal is to receive a CSI-RS.

The ninth information is used to indicate the start moment of receiving the CSI-RS by the terminal.

The tenth information is used to indicate the end moment of receiving the CSI-RS by the terminal.

The eleventh information is used to indicate the duration of receiving the CSI-RS by the terminal.

The twelfth information is used to indicate whether the terminal is to report CSI.

The thirteenth information is used to indicate the start moment of reporting the CSI by the terminal.

The fourteenth information is used to indicate the end moment of reporting the CSI by the terminal.

The fifteenth information is used to indicate the duration of reporting the CSI by the terminal.

It should be noted that for implementation processes of the first information to the fifteenth information, reference may be made to the foregoing related descriptions of (1) to (15). To avoid repetition, this is not limited herein.

S330: The terminal performs a predetermined behavior based on the first indication.

The predetermined behavior includes at least one of monitoring the target channel or signal monitoring occasion, monitoring a physical downlink control channel PDCCH, measuring a channel state information-reference signal CSI-RS, and reporting CSI.

It can be understood that for an implementation process of S330, reference may be made to related descriptions in the method embodiment 200. In addition, in this embodiment, processes of performing the predetermined behavior by the terminal may vary with different content indicated by the first indication. This is described below with reference to different examples.

### Example 1

Assuming that the predetermined behavior includes monitoring the target channel or signal monitoring occasion, in a case that the first indication is used to indicate the first duration, that the terminal monitors the target channel or signal monitoring occasion based on the first indication may include at least one of the following (1a) to (1c).

(1a) The terminal skips monitoring a target channel or signal monitoring occasion that fully overlaps the first duration.

For example, assuming that a target channel or signal monitoring occasion 1 fully overlaps the first duration, the terminal skips monitoring (or does not monitor) the target channel or signal monitoring occasion 1.

(1b) The terminal skips monitoring a target channel or signal monitoring occasion that partially overlaps the first duration.

For example, assuming that a target channel 1 or a signal monitoring occasion 1 partially overlaps the first duration, the terminal may skip monitoring (or does not monitor) the target channel 1 or the signal monitoring occasion 1, or may skip only some MOs of the target channel 1 or signal monitoring occasion 1 that overlap the first duration. This is not limited.

(1c) The terminal resumes monitoring of a target channel or signal monitoring occasion after the first duration ends.

For example, assuming that the first duration is [a, b], if the time [a, b] ends after the terminal skips monitoring a target channel or signal monitoring occasion that fully and/or partially overlaps the time [a, b], the terminal resumes monitoring of a target channel or signal monitoring occasion after the time [a, b],

Correspondingly, assuming that the predetermined behavior includes monitoring a PDCCH, in a case that the first indication is used to indicate the first duration, that the terminal monitors a PDCCH based on the first indication includes at least one of the following (1d) to (1f).

(1d) The terminal skips monitoring a PDCCH that fully overlaps the first duration.

For example, assuming that a monitoring occasion for a PDCCH fully overlaps the first duration, the terminal skips monitoring (or does not monitor) the PDCCH.

(1e) The terminal skips monitoring a PDCCH that partially overlaps the first duration.

For example, the terminal may skip a part of PDCCH monitoring duration that overlaps the first duration, and the terminal may still perform PDCCH monitoring in a non-overlapping part. For another example, if the terminal is configured with DRX and PDCCH monitoring duration has a fixed length (for example, a DRX on-duration timer), the entire DRX on-duration is skipped.

(1f) The terminal starts or resumes PDCCH monitoring after the first duration ends.

In an implementation, if the terminal is configured with DRX, a method for starting or resuming PDCCH monitoring by the terminal after the first duration ends may be implemented by starting a DRX on-duration timer or a DRX inactivity timer. A start moment (or a start position) of the DRX on-duration timer is an end moment of a first time unit to which an end moment of the first duration belongs, and/or a start moment of the DRX on-duration timer is a start moment of a corresponding DRX cycle.

It can be understood that because it is agreed upon in an existing protocol that one DRX cycle has only one DRX on-duration, when PDCCH monitoring is started or resumed by starting the DRX on-duration timer, it indicates that the first duration implicitly changes a start moment of the DRX on-duration (which may also be understood as the DRX on-duration timer), that is, DRX on-duration at an original position is modified.

In addition, in a case that the terminal starts or resumes PDCCH monitoring by starting the DRX on-duration timer, the terminal may cancel starting a DRX on-duration timer other than the DRX on-duration timer within a first time range. The first time range may be agreed upon in a protocol, configured by a network, configured by higher layer signaling, or the like. This is not limited herein.

### Example 2

Assuming that the predetermined behavior includes monitoring the target channel or signal monitoring occasion, in a case that the first indication is used to indicate the N target channel or signal monitoring occasions that the terminal does not monitor, that the terminal monitors the target channel or signal monitoring occasion based on the first indication includes: The terminal skips monitoring the N target channel or signal monitoring occasions after a first moment, where the first moment is a moment at which the terminal completes reception of the first indication, or an end moment of a target channel or signal monitoring occasion on which the terminal completes reception of the first indication.

In addition, in an embodiment, the terminal resumes monitoring of a target channel or signal monitoring occasion after skipping monitoring the N target channel or signal monitoring occasions. For example, assuming that N is 2, the terminal resumes monitoring of a subsequent target channel or signal monitoring occasion (after the two target channel or signal monitoring occasions) after skipping monitoring the two target channel or signal monitoring occasions.

Correspondingly, assuming that the predetermined behavior includes monitoring a PDCCH, in a case that the first indication is used to indicate the N target channel or signal monitoring occasions that the terminal does not monitor, that the terminal monitors a PDCCH based on the first indication includes: The terminal skips monitoring the N target channel or signal monitoring occasions after a first moment, as well as PDCCH monitoring during this period. In addition, the terminal resumes monitoring of a subsequent target channel or signal monitoring occasion (after the N target channel or signal monitoring occasions) and resumes monitoring of a subsequent PDCCH after skipping the N target channel or signal monitoring occasions and the PDCCH monitoring during this period.

It can be understood that in a case that the terminal is configured with DRX, for a method for starting or resuming PDCCH monitoring by the terminal, reference may be made to related descriptions in Example 1. For example, PDCCH monitoring may be started or resumed by starting a DRX on-duration timer or a DRX inactive timer. This is not described in detail again.

### Example 3

Assuming that the predetermined behavior includes monitoring the target channel or signal monitoring occasion, in a case that the first indication is used to indicate the target channel or signal monitoring occasion that the terminal needs to monitor, that the terminal monitors the target channel or signal monitoring occasion based on the first indication includes: The terminal monitors the target channel or signal monitoring occasion that the terminal needs to monitor.

For example, if the first indication indicates indexes A, B, and C of target channel or signal monitoring occasions that need to be monitored, the terminal monitors a target channel or signal monitoring occasion on the target channel or signal monitoring occasions indexed as A, B, and C.

Correspondingly, assuming that the predetermined behavior includes monitoring a PDCCH, in a case that the first indication is used to indicate the target channel or signal monitoring occasion that the terminal needs to monitor, that the terminal monitors a PDCCH based on the first indication includes: The terminal monitors a PDCCH that the terminal needs to monitor. For example, if the first indication indicates indexes A, B, and C of target channel or signal monitoring occasions that need to be monitored, the terminal monitors a PDCCH on the target channel or signal monitoring occasions indexed as A, B, and C.

It can be understood that in a case that the terminal is configured with DRX, for a method for monitoring a PDCCH by the terminal, reference may be made to related descriptions in Example 1. For example, PDCCH monitoring may be started or resumed by starting a DRX on-duration timer or a DRX inactive timer. This is not described herein again.

In Example 1 to Example 3, the first indication may be determined based on prediction performed by the network device on a jitter of a service packet. For example, the network device configures quite dense target channel or signal monitoring occasions within a jitter range of a service packet, but the network device may predict a jitter range of a service packet and then transmit the first indication on a target channel or signal monitoring occasion to dynamically skip monitoring some target channel or signal monitoring occasions, so as to implement energy saving for the terminal.

### Example 4

Assuming that the predetermined behavior includes monitoring a PDCCH, in a case that the first indication is used to indicate any one of the start moment and/or end moment of monitoring a PDCCH and the duration of monitoring a PDCCH, that the terminal monitors a PDCCH based on the first indication includes: monitoring the PDCCH within target monitoring duration, where the target monitoring duration is determined based on any one of the start moment and/or end moment of monitoring a PDCCH and the duration of monitoring a PDCCH.

The target monitoring duration is duration within which PDCCH monitoring is performed.

For example, in a case that the first indication indicates a start moment T1 of monitoring a PDCCH, the terminal may determine the target monitoring duration based on the start moment T1 and predetermined duration. For another example, in a case that the first indication indicates an end moment T2 of monitoring a PDCCH, the terminal determines the target monitoring duration based on that end moment T2 and predetermined duration. The predetermined duration may be agreed upon in a protocol, configured by a network, or the like. This is not limited herein.

It can be understood that, in a case that the terminal is configured with DRX, for a method for monitoring a PDCCH by the terminal, reference may be made to related descriptions in Example 1. For example, the terminal may monitor a PDCCH, for example, start or resume PDCCH monitoring, by starting a DRX on-duration timer or a DRX inactive timer. This is not described herein again.

Correspondingly, assuming that the predetermined behavior includes monitoring the target channel or signal monitoring occasion, in a case that the first indication is used to indicate any one of the start moment and/or the end moment of monitoring a PDCCH and the duration of monitoring a PDCCH, that the terminal monitors the target channel or signal monitoring occasion based on the first indication includes: skipping monitoring the target channel or signal monitoring occasion within the target monitoring duration, where the target monitoring duration is determined based on any one of the start moment and/or end moment of monitoring a PDCCH and the duration of monitoring a PDCCH. Details about how to determine the target monitoring duration are not described herein again.

### Example 5

Assuming that the predetermined behavior includes monitoring the target channel or signal monitoring occasion, in a case that the first indication indicates a first specific value, the terminal may skip monitoring a first target channel or signal monitoring occasion, where the first target channel or signal monitoring occasion is a target channel or signal monitoring occasion within the first monitoring time window and located after a reception moment of the first indication. To be specific, in a case that the first indication indicates the first specific value, the first target channel or signal monitoring occasion after reception of the first indication is skipped by default, that is, the first target channel or signal monitoring occasion is invalid.

Correspondingly, assuming that the predetermined behavior is monitoring a PDCCH, in a case that the first indication indicates a second specific value, the terminal starts or resumes PDCCH monitoring after the first indication is received. To be specific, the second specific value indicated by the first indication is equivalent to a wake-up signal for waking up the terminal for PDCCH monitoring.

It can be understood that the first specific value and the second specific value may be the same or different. For example, when the first specific value is the same as the second specific value, in a case that the terminal receives the first or second specific value indicated by the first indication, the terminal skips monitoring the first target channel or signal monitoring occasion, and starts or resumes PDCCH monitoring. In addition, the first specific value and the second specific value may be agreed upon in a protocol, configured by a network, configured by using higher layer signaling, or the like, for example, may be "11". This is not limited herein.

In an implementation, similar to Example 1, after the terminal receives the first indication, the terminal may start or resume PDCCH monitoring by starting a DRX on-duration timer or a DRX inactivity timer. A start moment of the DRX on-duration timer is an end moment of a first time unit to which an end moment of the first duration belongs, and/or a start moment of the DRX on-duration timer is a start moment of a corresponding DRX cycle.

In addition, in a case that the DRX on-duration timer is started, the terminal may further cancel starting a DRX on-duration timer other than the DRX on-duration timer within a second time range.

It should be noted that, in a possible implementation, before the terminal performs the predetermined behavior based on the first indication, the method may further include any one of the following (1) and (2):
(1) in a case that the terminal detects a wake-up indication, ignoring the first indication; and
(2) in a case that the terminal detects a wake-up indication, ignoring the first indication, and skipping monitoring all target channel or signal monitoring occasions after the wake-up indication is received.

That is, in this embodiment, a priority of the wake-up indication is higher than that of the first indication, so that communication performance of the terminal can be ensured.

Further, based on the descriptions of Example 1 to Example 5, the following describes this embodiment with reference to three possible implementations by assuming that the target channel or signal monitoring occasion is a WUS MO.

### First implementation

The network device may configure a size of the first monitoring time window (namely, a detection time window) to be equal to a jitter range of a service packet, and configure a plurality of WUS MOs (namely, target channel or signal monitoring occasions) within the first monitoring time window. In this case, the terminal may monitor a first indication on the plurality of WUS MOs in sequence. The first indication may be carried in DCI. The first indication indicates first duration (namely, duration, which is 2 bits), and the first duration is configured by a network and has a total of four values: "00" corresponds to 2 ms, "01" corresponds to 4 ms, and " 10" corresponds to 6 ms. In addition, when a value of the first duration is "11", it indicates that PDCCH monitoring is started (namely, enabled) after a WUS MO on which the first indication is being received ends.

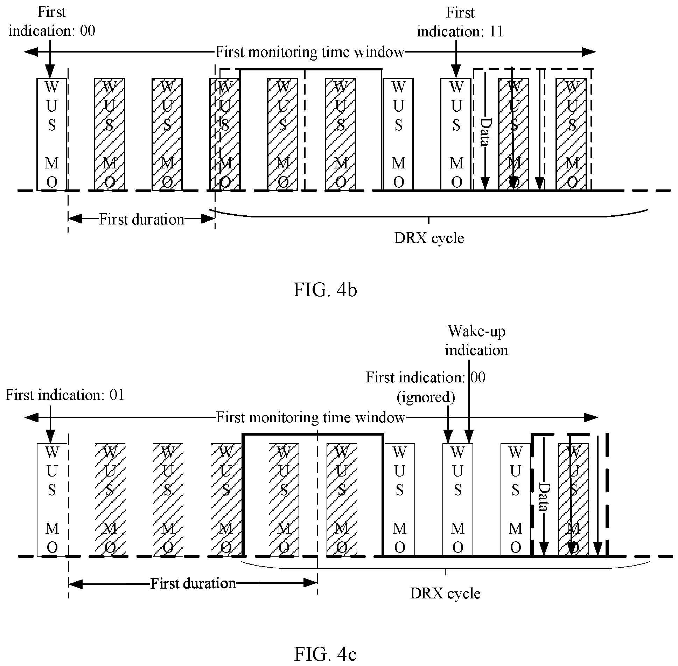

In this case, with reference to FIG. 4b, if the terminal detects the first indication on a first WUS MO and the duration is indicated as "00", the terminal starts to perform duration (2 ms) countdown after the WUS MO ends.

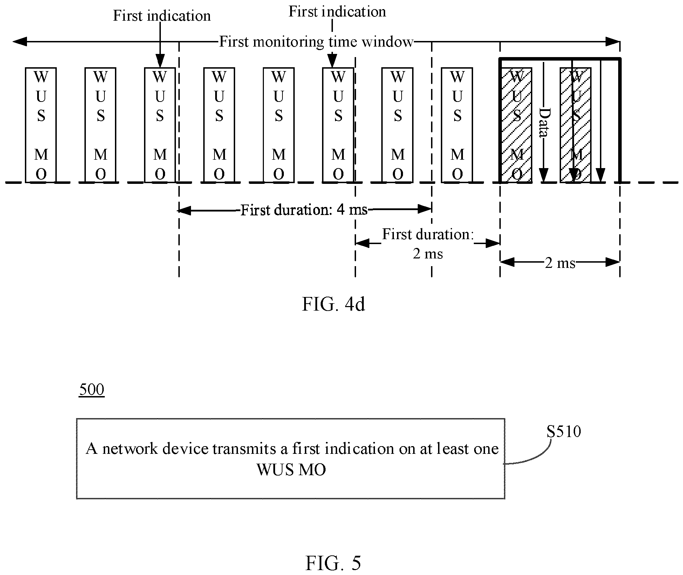

Within the duration, if a WUS MO fully or partially overlaps the duration, monitoring on the first indication is skipped on the WUS MO (for example, a second WUS MO, a third WUS MO, and a fourth WUS MO) that fully or partially overlaps the duration. It should be noted that, in FIG. 4b and the subsequent FIG. 4c and FIG. 4d, WUS MOs with shadow patterns are WUS MOs that need to be skipped, namely, WUS MOs on which no monitoring is performed.

After the duration ends, PDCCH monitoring is resumed by triggering a drx-inactivity timer. In a PDCCH monitoring period, no monitoring needs to be performed on a WUS MO (for example, a fifth WUS MO).

If corresponding frame data scheduling is still not detected in the PDCCH monitoring period, the terminal continues to monitor a WUS MO (for example, a sixth WUS MO, a seventh WUS MO, or an eighth WUS MO) after the PDCCH monitoring ends.

Still with reference to FIG. 4b, during subsequent WUS MO monitoring, if the terminal detects a new first indication on the eighth WUS MO and duration indicated by the first indication is "11", the terminal starts PDCCH monitoring.

### Second implementation

The network device may configure a size of the first monitoring time window (namely, a detection time window) to be equal to a jitter range of a service packet, and configure a plurality of WUS MOs (namely, target channel or signal monitoring occasions) within the first monitoring time window. In this case, the terminal monitors a first indication on the plurality of WUS MOs in sequence. The first indication may be carried in a sequence, and carries information about first duration (namely, duration, which is 2 bits), and the duration is configured by a network and has a total of three values: "00" corresponds to 2 ms, "01" corresponds to 4 ms, and " 1 0" corresponds to 6 ms.

In this case, with reference to FIG. 4c, if the terminal detects the first indication on a first WUS MO and the first indication indicates that the duration is 01, the terminal starts to perform duration (4 ms) countdown after that WUS MO ends.

Within the duration, if a WUS MO (for example, a second WUS MO, a third WUS MO, a fourth WUS MO, or a fifth WUS MO) fully overlaps or partially overlaps the duration, monitoring on the first indication is skipped on that WUS MO, and PDCCH monitoring in a part that overlaps PDCCH monitoring duration is skipped.

After the duration ends, monitoring on a WUS MO is resumed.

If corresponding frame data scheduling is still not detected in the PDCCH monitoring period, the terminal continues to monitor a WUS MO after the PDCCH monitoring ends.

Still with reference to FIG. 4c, during subsequent WUS MO monitoring, the terminal detects both a first indication and a wake-up indication on an eighth WUS MO. In this case, the terminal may ignore content indicated by the first indication, and start PDCCH monitoring.

### Third implementation

The network device may configure a size of the first monitoring time window (namely, a monitoring time window) to be equal to a jitter range (jitter range) of a service packet, and configure a plurality of WUS MOs (namely, target channel or signal monitoring occasions) within the first monitoring time window. On the WUS MOs, the terminal monitors a first indication, and the first indication is used to indicate a start moment of PDCCH monitoring and duration of PDCCH monitoring.

In this case, with reference to FIG. 4d, the start moment of PDCCH monitoring is 4 ms after reception on a current WUS MO. If the duration of PDCCH monitoring is 2 ms, but the terminal detects a first indication once on a subsequent WUS MO before PDCCH monitoring starts, and the first indication updates content of previously indicated content, start time of PDCCH monitoring is 2 ms after the current WUS, and PDCCH duration is 2 ms, that is, the terminal performs a PDCCH monitoring behavior based on the latest indication.

It should be noted that a remaining WUS MO becomes invalid after PDCCH monitoring starts, that is, monitoring on the remaining WUS MO is skipped.

In this embodiment of this application, due to impact of a jitter range of a service packet, to implement energy saving for the terminal while ensuring data transmission performance, the first indication is introduced to skip WUS MO monitoring and/or PDCCH monitoring, so as to avoid excessive power consumption caused by excessive WUS MO and/or PDCCH monitoring.

In addition, in this application, through prediction on data packets (frames) with different priorities and a jitter range of a service packet, one or more WUS MOs can be skipped more flexibly, or an appropriate start moment and appropriate duration of PDCCH monitoring can be predicted, to further cope with impact of a jitter range of a service packet on transmission performance, and save energy.

FIG. 5 is a schematic flowchart of a transmission processing method 500 according to an example embodiment of this application. The method 500 may be performed by a network device but is not limited thereto, and may be specifically performed by hardware and/or software installed in the network device. In this embodiment, the method 500 may include at least the following steps.

S510: The network device transmits a first indication on at least one target channel or signal monitoring occasion.

The first indication is used to indicate a terminal to perform a predetermined behavior, and the predetermined behavior includes at least one of monitoring a target channel or signal monitoring occasion, monitoring a physical downlink control channel PDCCH, measuring a channel state information-reference signal CSI-RS, and reporting CSI.

In a possible implementation, before the step of transmitting a first indication on at least one wake-up signal monitoring occasion or target channel or signal monitoring occasion, the method further includes: The network device transmits configuration information to the terminal, where the configuration information is used by the terminal to configure at least one of the following (1) to (4):
(1) a first monitoring time window, where configuration of the first monitoring time window is related to at least one of a service cycle, a jitter range of a service packet, a discontinuous reception DRX cycle, a DRX start moment, and DRX on-duration;
(2) at least one target channel or signal monitoring occasion, where the at least one target channel or signal monitoring occasion is configured within the first monitoring time window;
(3) a type of at least one target channel or signal monitoring occasion, where different types of the at least one target channel or signal monitoring occasion are associated with different service types, and/or different types of the at least one target channel or signal monitoring occasion are associated with different predetermined behaviors; and
(4) at least one second monitoring time window, where the at least one second monitoring time window is configured within the first monitoring time window.

In another possible implementation, the first indication is used to indicate at least one of the following (1) to (15):
(1) first duration;
(2) N target channel or signal monitoring occasions that the terminal does not monitor, where N is an integer greater than or equal to 0;
(3) a target channel or signal monitoring occasion that the terminal needs to monitor;
(4) whether the terminal is to be woken up for PDCCH monitoring;
(5) a start moment of monitoring a PDCCH by the terminal;
(6) an end moment of monitoring a PDCCH by the terminal;
(7) duration of monitoring a PDCCH by the terminal;
(8) whether the terminal is to receive a CSI-RS;
(9) a start moment of receiving the CSI-RS by the terminal;
(10) an end moment of receiving the CSI-RS by the terminal;
(11) duration of receiving the CSI-RS by the terminal;
(12) whether the terminal is to report CSI;
(13) a start moment of reporting the CSI by the terminal;
(14) an end moment of reporting the CSI by the terminal; and
(15) duration of reporting the CSI by the terminal.

It can be understood that, for implementation processes of implementations of the method embodiment 500, reference may be made to related descriptions in the method embodiments 200 and 300, with the same technical effects achieved. To avoid repetition, details are not described herein again.

It should be noted that the transmission processing methods 200 to 500 provided in the embodiments of this application may be performed by a transmission processing apparatus, or by a control module that is in the transmission processing apparatus and that is configured to perform the transmission processing method. In the embodiments of this application, a transmission processing apparatus provided in the embodiments of this application is described by using an example in which the transmission processing apparatus performs the transmission processing method.

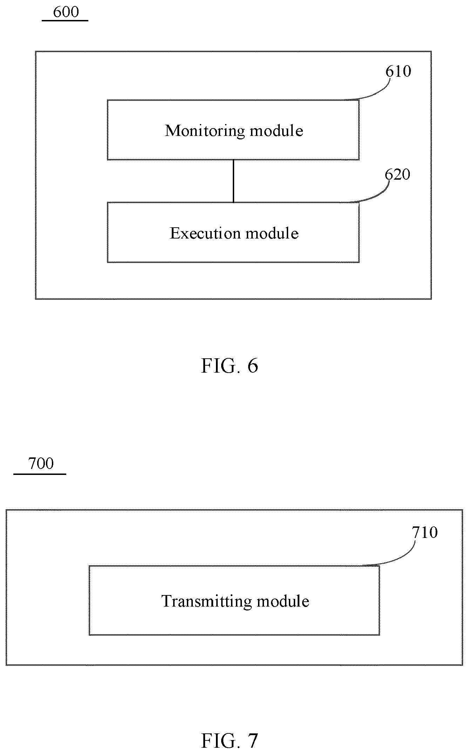

FIG. 6 is a schematic structural diagram of a transmission processing apparatus 600 according to an example embodiment of this application. The apparatus 600 is applied to a terminal. The apparatus 600 may include a monitoring module 610, configured to: in a non-PDCCH monitoring period, monitor a first indication on at least one target channel or signal monitoring occasion; and an execution module 620, configured to perform a predetermined behavior based on the first indication, where the predetermined behavior includes at least one of monitoring a target channel or signal monitoring occasion, monitoring a physical downlink control channel PDCCH, measuring a channel state information-reference signal CSI-RS, and reporting CSI.

Optionally, the monitoring module 610 is further configured to obtain configuration information, where the configuration information is used to configure at least one of the following: a first monitoring time window, where configuration of the first monitoring time window is related to at least one of a service cycle, a jitter range of a service packet, a DRX cycle, a DRX start moment, and DRX on-duration; the at least one target channel or signal monitoring occasion, where the at least one target channel or signal monitoring occasion is configured within the first monitoring time window; a type of the at least one target channel or signal monitoring occasion, where different types of the at least one target channel or signal monitoring occasion are associated with different service types, and/or different types of the at least one target channel or signal monitoring occasion are associated with different predetermined behaviors; and at least one second monitoring time window, where the at least one second monitoring time window is configured within the first monitoring time window.

Optionally, the first indication is used to indicate at least one of the following: first duration; N target channel or signal monitoring occasions that the terminal does not monitor, where N is an integer greater than or equal to 0; a target channel or signal monitoring occasion that the terminal needs to monitor; whether the terminal is to be woken up for PDCCH monitoring; a start moment of monitoring a PDCCH by the terminal; an end moment of monitoring a PDCCH by the terminal; duration of monitoring a PDCCH by the terminal; whether the terminal is to receive a CSI-RS; a start moment of receiving the CSI-RS by the terminal; an end moment of receiving the CSI-RS by the terminal; duration of receiving the CSI-RS by the terminal; whether the terminal is to report CSI; a start moment of reporting the CSI by the terminal; an end moment of reporting the CSI by the terminal; and duration of reporting the CSI by the terminal.

Optionally, in a case that the first indication is used to indicate the first duration, the execution module 620 includes at least one of the following: skipping monitoring, for the terminal, a target channel or signal monitoring occasion that fully overlaps the first duration; skipping monitoring, for the terminal, a target channel or signal monitoring occasion that partially overlaps the first duration; and resuming, for the terminal, monitoring of a target channel or signal monitoring occasion after the first duration ends.

Optionally, in a case that the first indication is used to indicate the first duration, the execution module 620 is configured to perform at least one of the following: skipping monitoring, for the terminal, a PDCCH that fully overlaps the first duration; skipping monitoring, for the terminal, a PDCCH that partially overlaps the first duration; and starting or resuming, for the terminal, PDCCH monitoring after the first duration ends.

Optionally, the execution module 620 is configured to start or resume PDCCH monitoring by starting a DRX on-duration timer or a DRX inactivity timer, where a start moment of the DRX on-duration timer is an end moment of a first time unit to which an end moment of the first duration belongs, and/or a start moment of the DRX on-duration timer is a start moment of a corresponding DRX cycle.

Optionally, in a case that the DRX on-duration timer is started, the execution module 620 is further configured to cancel starting a DRX on-duration timer other than the DRX on-duration timer within a first time range.

Optionally, in a case that the first indication is used to indicate the N target channel or signal monitoring occasions that the terminal does not monitor, the execution module 620 is configured to perform at least one of the following: skipping monitoring the N target channel or signal monitoring occasions after a first moment, where the first moment is a moment at which the terminal completes reception of the first indication, or an end moment of a target channel or signal monitoring occasion on which the terminal completes reception of the first indication.

Optionally, after skipping monitoring the N target channel or signal monitoring occasions, the execution module is further configured to resume monitoring of a target channel or signal monitoring occasion.

Optionally, in a case that the first indication is used to indicate the target channel or signal monitoring occasion that the terminal needs to monitor, the execution module 620 is configured to monitor the target channel or signal monitoring occasion that the terminal needs to monitor.

Optionally, in a case that the first indication is used to indicate any one of the start moment and/or the end moment of monitoring a PDCCH and the duration of monitoring a PDCCH, the execution module is configured to monitor the PDCCH within target monitoring duration, where the target monitoring duration is determined based on any one of the start moment and/or the end moment of monitoring a PDCCH and the duration of monitoring a PDCCH.

Optionally, in a case that the first indication is used to indicate any one of the start moment and/or the end moment of monitoring a PDCCH and the duration of monitoring a PDCCH, the execution module 620 is configured to skip monitoring the target channel or signal monitoring occasion within the target monitoring duration.

Optionally, the execution module 620 is further configured to: in a case that the first indication indicates a first specific value, skip monitoring a first target channel or signal monitoring occasion, where the first target channel or signal monitoring occasion is a target channel or signal monitoring occasion within the first monitoring time window and located after a reception moment of the first indication.

Optionally, the execution module 620 is further configured to: in a case that the first indication indicates a second specific value, start or resume, for the terminal, PDCCH monitoring after the first indication is received.

Optionally, the execution module 620 is configured to start or resume PDCCH monitoring by starting a DRX on-duration timer or a DRX inactivity timer, where a start moment of the DRX on-duration timer is an end moment of a first time unit to which an end moment of the first duration belongs, and/or a start moment of the DRX on-duration timer is a start moment of a corresponding DRX cycle.

Optionally, in a case that the DRX on-duration timer is started, the execution module 620 is further configured to cancel starting a DRX on-duration timer other than the DRX on-duration timer within a second time range.

Optionally, the execution module 620 is further configured to perform any one of the following: in a case that the terminal detects a wake-up indication, ignoring the first indication; and in a case that the terminal detects a wake-up indication, ignoring the first indication, and skipping monitoring all target channel or signal monitoring occasions after the wake-up indication is received.

FIG. 7 shows a transmission processing apparatus 700 according to an example embodiment of this application. The apparatus 700 is applied to a network device, and the apparatus 700 includes: a transmitting module 710, configured to transmit a first indication on at least one wake-up signal monitoring occasion or target channel or signal monitoring occasion, where the first indication is used to indicate a terminal to perform a predetermined behavior, and the predetermined behavior includes at least one of monitoring the signal monitoring target channel or signal monitoring occasion, monitoring a physical downlink control channel PDCCH, measuring a channel state information-reference signal CSI-RS, and reporting CSI.

Optionally, the transmitting module 710 is further configured to transmit configuration information to the terminal, where the configuration information is used by the terminal to configure at least one of the following: a first monitoring time window, where configuration of the first monitoring time window is related to at least one of a service cycle, a jitter range of a service packet, a discontinuous reception DRX cycle, a DRX start moment, and DRX on-duration; the at least one target channel or signal monitoring occasion, where the at least one target channel or signal monitoring occasion is configured within the first monitoring time window; a type of the at least one target channel or signal monitoring occasion, where different types of the at least one target channel or signal monitoring occasion are associated with different service types, and/or different types of the at least one target channel or signal monitoring occasion are associated with different predetermined behaviors; and at least one second monitoring time window, where the at least one second monitoring time window is configured within the first monitoring time window.

Optionally, the apparatus 700 may further include a configuration module, where the configuration module is configured to configure the configuration information.

Optionally, the first indication is used to indicate at least one of the following: first duration; N target channel or signal monitoring occasions that the terminal does not monitor, where N is an integer greater than or equal to 0; a target channel or signal monitoring occasion that the terminal needs to monitor; whether the terminal is to be woken up for PDCCH monitoring; a start moment of monitoring a PDCCH by the terminal; an end moment of monitoring a PDCCH by the terminal; duration of monitoring a PDCCH by the terminal; whether the terminal is to receive a CSI-RS; a start moment of receiving the CSI-RS by the terminal; an end moment of receiving the CSI-RS by the terminal; duration of receiving the CSI-RS by the terminal; whether the terminal is to report CSI; a start moment of reporting the CSI by the terminal; an end moment of reporting the CSI by the terminal; and duration of reporting the CSI by the terminal.

The transmission processing apparatus 600 or 700 in the embodiments of this application may be an apparatus, or an apparatus or an electronic device with an operating system, or may be a component, an integrated circuit, or a chip in a terminal. The apparatus or the electronic device may be a mobile terminal or a non-mobile terminal. For example, the mobile terminal may include but is not limited to the aforementioned types of the terminal 11, and the non-mobile terminal may be a server, a network attached storage (Network Attached Storage, NAS), a personal computer (personal computer, PC), a television (television, TV), a teller machine, a self-service machine, or the like. This is not specifically limited in the embodiments of this application.

The transmission processing apparatus 600 or 700 provided in the embodiments of this application is capable of implementing the processes implemented in the method embodiments of FIG. 2 to FIG. 5, with the same technical effects achieved. To avoid repetition, details are not described herein again.

An embodiment of this application further provides a terminal, including a processor and a communications interface, where the communications interface is coupled to the processor, and the processor is configured to run a program or instructions, to implement the method in the method embodiment 200 or 300. The terminal embodiment corresponds to the foregoing terminal-side method embodiments, and all implementation processes and implementations of the foregoing method embodiments are applicable to the terminal embodiment, with the same technical effects achieved.

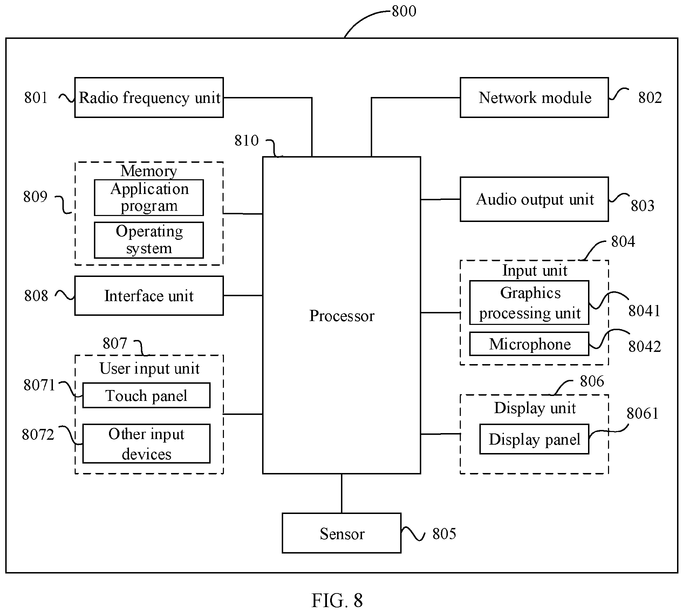

Specifically, FIG. 8 is a schematic diagram of a hardware structure of a terminal for implementing an embodiment of this application. The terminal 800 includes but is not limited to at least some of components such as a radio frequency unit 801, a network module 802, an audio output unit 803, an input unit 804, a sensor 805, a display unit 806, a user input unit 807, an interface unit 808, a memory 809, and a processor 810.

Persons skilled in the art can understand that the terminal 800 may further include a power supply (for example, a battery) that supplies power to each component. The power supply may be logically connected to the processor 810 by using a power management system, to implement functions such as charging management, discharging management, and power consumption management by using the power management system. The terminal structure shown in FIG. 8 does not constitute a limitation on the terminal. The terminal may include more or fewer components than those shown in the figure, or some components may be combined, or there may be a different component layout. Details are not described herein again.

It should be understood that, in this embodiment of this application, the input unit 804 may include a graphics processing unit (Graphics Processing Unit, GPU) 1041 and a microphone 8042. The graphics processing unit 8041 processes image data of a static picture or a video that is obtained by an image capture apparatus (for example, a camera) in a video capture mode or an image capture mode. The display unit 806 may include a display panel 8061. The display panel 8061 may be configured in a form of a liquid crystal display, an organic light-emitting diode, or the like. The user input unit 807 includes a touch panel 8071 and other input devices 8072. The touch panel 8071 is also referred to as a touchscreen. The touch panel 8071 may include two parts: a touch detection apparatus and a touch controller. The other input devices 8072 may include but are not limited to a physical keyboard, a function key (such as a volume control key or an on/off key), a trackball, a mouse, and a joystick. Details are not described herein.

In this embodiment of this application, the radio frequency unit 801 detects downlink data that comes from a network device and then transmits the downlink data to the processor 810 for processing; and transmits uplink data to the network device. Usually, the radio frequency unit 801 includes but is not limited to an antenna, at least one amplifier, a transceiver, a coupler, a low noise amplifier, a duplexer, and the like.

The memory 809 may be configured to store software programs or instructions and various data. The memory 809 may mainly include a program or instruction storage region and a data storage region. The program or instruction storage region may store an operating system, an application program or instructions required by at least one function (for example, an audio play function or an image play function), and the like. In addition, the memory 809 may include a high-speed random access memory, or may include a non-volatile memory, where the non-volatile memory may be a read-only memory (Read-Only Memory, ROM), a programmable read-only memory (Programmable ROM, PROM), an erasable programmable read-only memory(Erasable PROM, EPROM), an electrically erasable programmable read-only memory (Electrically EPROM, EEPROM), or a flash memory, for example, at least one magnetic disk storage device, a flash memory, or another non-volatile solid-state storage device.

The processor 810 may include one or more processing units. Optionally, the processor 810 may integrate an application processor and a modem processor. The application processor mainly processes an operating system, a user interface, an application program or instructions, and the like. The modem processor mainly processes wireless communication, for example, a baseband processor. It can be understood that the modem processor may alternatively be not integrated in the processor 810.

The radio frequency unit 801 is configured to: in a non-PDCCH monitoring period, monitor, for the terminal, a first indication on at least one target channel or signal monitoring occasion.

The processor 810 is configured to perform a predetermined behavior based on the first indication, where the predetermined behavior includes at least one of monitoring the target channel or signal monitoring occasion, monitoring a physical downlink control channel PDCCH, measuring a channel state information-reference signal CSI-RS, and reporting CSI.

Optionally, the radio frequency unit 801 is further configured to obtain configuration information, where the configuration information is used to configure at least one of the following: a first monitoring time window, where configuration of the first monitoring time window is related to at least one of a service cycle, a jitter range of a service packet, a DRX cycle, a DRX start moment, and DRX on-duration; the at least one target channel or signal monitoring occasion, where the at least one target channel or signal monitoring occasion is configured within the first monitoring time window; a type of the at least one target channel or signal monitoring occasion, where different types of the at least one target channel or signal monitoring occasion are associated with different service types, and/or different types of the at least one target channel or signal monitoring occasion are associated with different predetermined behaviors; and at least one second monitoring time window, where the at least one second monitoring time window is configured within the first monitoring time window.

Optionally, the first indication is used to indicate at least one of the following: first duration; N target channel or signal monitoring occasions that the terminal does not monitor, where N is an integer greater than or equal to 0; a target channel or signal monitoring occasion that the terminal needs to monitor; whether the terminal is to be woken up for PDCCH monitoring; a start moment of monitoring a PDCCH by the terminal; an end moment of monitoring a PDCCH by the terminal; duration of monitoring a PDCCH by the terminal; whether the terminal is to receive a CSI-RS; a start moment of receiving the CSI-RS by the terminal; an end moment of receiving the CSI-RS by the terminal; duration of receiving the CSI-RS by the terminal; whether the terminal is to report CSI; a start moment of reporting the CSI by the terminal; an end moment of reporting the CSI by the terminal; and duration of reporting the CSI by the terminal.

Optionally, in a case that the first indication is used to indicate the first duration, the processor 810 is configured to perform at least one of the following: skipping monitoring, for the terminal, a target channel or signal monitoring occasion that fully overlaps the first duration; skipping monitoring, for the terminal, a target channel or signal monitoring occasion that partially overlaps the first duration; and resuming, for the terminal, monitoring of a target channel or signal monitoring occasion after the first duration ends.

Optionally, in a case that the first indication is used to indicate the first duration, the processor 810 is configured to perform at least one of the following: skipping monitoring, for the terminal, a PDCCH that fully overlaps the first duration; skipping monitoring, for the terminal, a PDCCH that partially overlaps the first duration; and starting or resuming, for the terminal, PDCCH monitoring after the first duration ends.

Optionally, the processor 810 is further configured to start or resume PDCCH monitoring by starting a DRX on-duration timer or a DRX inactivity timer, where a start moment of the DRX on-duration timer is an end moment of a first time unit to which an end moment of the first duration belongs, and/or a start moment of the DRX on-duration timer is a start moment of a corresponding DRX cycle.

Optionally, in a case that the DRX on-duration timer is started, the processor 810 is further configured to cancel starting a DRX on-duration timer other than the DRX on-duration timer within a first time range.

Optionally, in a case that the first indication is used to indicate the N target channel or signal monitoring occasions that the terminal does not monitor, the processor 810 is configured to perform at least one of the following: skipping monitoring the N target channel or signal monitoring occasions after a first moment, where the first moment is a moment at which the terminal completes reception of the first indication, or an end moment of a target channel or signal monitoring occasion on which the terminal completes reception of the first indication.

Optionally, after skipping monitoring the N target channel or signal monitoring occasions, the execution module is further configured to resume monitoring of a target channel or signal monitoring occasion.

Optionally, in a case that the first indication is used to indicate the target channel or signal monitoring occasion that the terminal needs to monitor, the processor 810 is configured to monitor the target channel or signal monitoring occasion that the terminal needs to monitor.

Optionally, in a case that the first indication is used to indicate any one of the start moment and/or the end moment of monitoring a PDCCH and the duration of monitoring a PDCCH, the execution module is configured to monitor the PDCCH within target monitoring duration, where the target monitoring duration is determined based on any one of the start moment and/or the end moment of monitoring a PDCCH and the duration of monitoring a PDCCH.

Optionally, in a case that the first indication is used to indicate any one of the start moment and/or the end moment of monitoring a PDCCH and the duration of monitoring a PDCCH, the processor 810 is configured to skip monitoring the target channel or signal monitoring occasion within the target monitoring duration.

Optionally, the processor 810 is further configured to: in a case that the first indication indicates a first specific value, skip monitoring a first target channel or signal monitoring occasion, where the first target channel or signal monitoring occasion is a target channel or signal monitoring occasion within the first monitoring time window and located after a reception moment of the first indication.

Optionally, the processor 810 is further configured to: in a case that the first indication indicates a second specific value, start or resume, for the terminal, PDCCH monitoring after the first indication is received.

Optionally, the processor 810 is configured to start or resume PDCCH monitoring by starting a DRX on-duration timer or a DRX inactivity timer, where a start moment of the DRX on-duration timer is an end moment of a first time unit to which an end moment of the first duration belongs, and/or a start moment of the DRX on-duration timer is a start moment of a corresponding DRX cycle.

Optionally, in a case that the DRX on-duration timer is started, the processor 810 is further configured to cancel starting a DRX on-duration timer other than the DRX on-duration timer within a second time range.

Optionally, the processor 810 is further configured to perform any one of the following: in a case that the terminal detects a wake-up indication, ignoring the first indication; and in a case that the terminal detects a wake-up indication, ignoring the first indication, and skipping monitoring all target channel or signal monitoring occasions after the wake-up indication is received.

In this embodiment, due to impact of a jitter range of a service packet, to implement energy saving for the terminal while ensuring data transmission performance, the first indication is introduced to skip monitoring a target channel or signal monitoring occasion and/or monitoring a PDCCH, so as to avoid excessive power consumption caused by excessive monitoring on target channel or signal monitoring occasions and/or PDCCHs.

In addition, in this application, through prediction on data packets (frames) with different priorities and a jitter range of a service packet, one or more target channel or signal monitoring occasions can be skipped more flexibly, or an appropriate start moment and appropriate duration of PDCCH monitoring can be predicted, to further cope with impact of a jitter range of a service packet on transmission performance, and save energy.

An embodiment of this application further provides a network device, including a processor and a communications interface, where the communications interface is coupled to the processor, and the processor is configured to run a program or instructions, to implement the method in the method embodiment 500. The network device embodiment corresponds to the foregoing network device method embodiments, and all implementation processes and implementations of the foregoing method embodiments are applicable to the network device embodiment, with the same technical effects achieved.

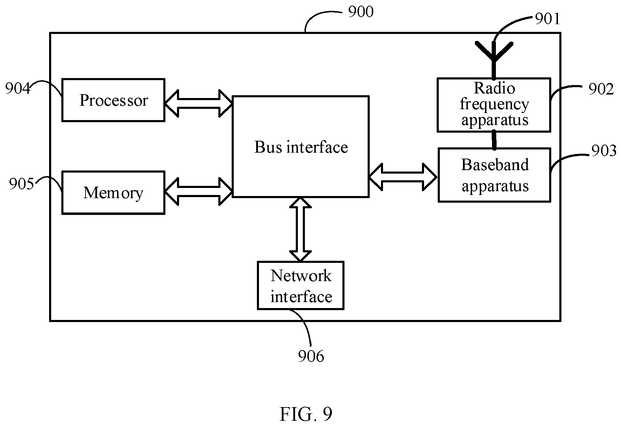

Specifically, an embodiment of this application further provides a network device. As shown in FIG. 9, the network device 900 includes an antenna 901, a radio frequency apparatus 902, and a baseband apparatus 903. The antenna 901 is connected to the radio frequency apparatus 902. In an uplink direction, the radio frequency apparatus 902 detects information through the antenna 901, and transmits the detected information to the baseband apparatus 903 for processing. In a downlink direction, the baseband apparatus 903 processes to-be-transmitted information, and transmits the information to the radio frequency apparatus 92; and the radio frequency apparatus 92 processes the received information and then transmits the information through the antenna 91.

The frequency band processing apparatus may be located in the baseband apparatus 903. The method performed by the network device in the foregoing embodiment may be implemented by the baseband apparatus 903, and the baseband apparatus 903 includes a processor 904 and a memory 905.

The baseband apparatus 903 may include, for example, at least one baseband processing unit, where a plurality of chips are disposed on the baseband processing unit. As shown in FIG. 9, one of the chips is, for example, the processor 904, and connected to the memory 905, to invoke the program in the memory 905 to perform the operations of the network device shown in the foregoing method embodiments.

The baseband apparatus 903 may further include a network interface 906, configured to exchange information with the radio frequency apparatus 902. The interface is, for example, a common public radio interface (common public radio interface, CPRI for short).

Specifically, the network device in this embodiment of the present invention further includes instructions or a program stored in the memory 905 and executable on the processor 904, and the processor 904 invokes the instructions or program in the memory 905 to perform the method performed by the modules shown in FIG. 7, with the same technical effects achieved. To avoid repetition, details are not described herein again.

An embodiment of this application further provides a readable storage medium. The readable storage medium stores a program or instructions. When the program or instructions are executed by a processor, the processes of the transmission processing method embodiments 200 to 500 are implemented, with the same technical effects achieved. To avoid repetition, details are not described herein again.

The processor is a processor in the terminal in the foregoing embodiments. The readable storage medium includes a computer-readable storage medium, for example, a computer read-only memory (Read-Only Memory, ROM).

An embodiment of this application further provides a chip. The chip includes a processor and a communications interface. The communications interface is coupled to the processor. The processor is configured to run a program or instructions for a network device, to implement the processes of the foregoing transmission processing method embodiments 200 to 500, with the same technical effects achieved. To avoid repetition, details are not described herein again.

It should be understood that the chip provided in the embodiments of this application may also be referred to as a system-level chip, a system on chip, a chip system, a system-on-a-chip, or the like.

An embodiment of this application further provides a computer program product. The computer program product includes a processor, a memory, and a program or instructions stored in the memory and executable on the processor. When the program or instructions are executed by the processor, the processes of the foregoing transmission processing method embodiments 200 to 500 are implemented, with the same technical effects achieved. To avoid repetition, details are not described herein again.

It should be noted that in this specification, the terms "include" and "comprise", or any of their variants are intended to cover a non-exclusive inclusion, such that a process, method, article, or apparatus that includes a list of elements not only includes those elements but also includes other elements that are not expressly listed, or further includes elements inherent to such process, method, article, or apparatus. In absence of more constraints, an element preceded by "includes a..." does not preclude the existence of other identical elements in the process, method, article, or apparatus that includes the element. Furthermore, it should be noted that the scope of the methods and apparatuses in the embodiments of this application is not limited to performing the functions in the order shown or discussed, but may also include performing the functions in a substantially simultaneous manner or in a reverse order depending on the functions involved. For example, the described methods may be performed in an order different from that described, and various steps may be added, omitted, or combined. In addition, features described with reference to some examples may be combined in other examples.

According to the foregoing descriptions of the implementations, persons skilled in the art can clearly understand that the methods in the foregoing embodiments may be implemented by using software in combination with a necessary common hardware platform, or certainly may be implemented by using hardware. However, in most cases, the former is a preferred implementation. Based on such an understanding, the technical solutions of this application essentially or the part contributing to the conventional technology may be implemented in a form of a computer software product. The computer software product may be stored in a storage medium (for example, a ROM/RAM, a magnetic disk, or a compact disc), and includes several instructions for instructing a terminal (which may be a mobile phone, a computer, a server, an air conditioner, a network device, or the like) to perform the methods in the embodiments of this application.

The foregoing describes embodiments of this application with reference to the accompanying drawings. However, this application is not limited to the foregoing specific implementations. The foregoing specific implementations are merely examples, but are not limitative. Inspired by this application, persons of ordinary skill in the art may further make many modifications without departing from the purposes of this application and the protection scope of the claims, and all the modifications shall fall within the protection scope of this application.

## Claims

1. A transmission processing method, comprising:
in a non-physical downlink control channel PDCCH monitoring period, monitoring, by a terminal, a first indication on at least one target channel or signal monitoring occasion; and
performing, by the terminal, a predetermined behavior based on the first indication, wherein
the predetermined behavior comprises at least one of monitoring the target channel or signal monitoring occasion, monitoring a PDCCH, measuring a channel state information-reference signal CSI-RS, and reporting CSI.

2. The method according to claim 1, wherein before the monitoring a first indication on at least one target channel or signal monitoring occasion, the method further comprises:
obtaining, by the terminal, configuration information, wherein the configuration information is used to configure at least one of the following:
a first monitoring time window, wherein configuration of the first monitoring time window is related to at least one of a service cycle, a jitter range of a service packet, a discontinuous reception DRX cycle, a DRX start moment, and DRX on-duration;
the at least one target channel or signal monitoring occasion, wherein the at least one target channel or signal monitoring occasion is configured within the first monitoring time window;
a type of the at least one target channel or signal monitoring occasion, wherein different types of the at least one target channel or signal monitoring occasion are associated with different service types, and/or different types of the at least one target channel or signal monitoring occasion are associated with different predetermined behaviors; and
at least one second monitoring time window, wherein the at least one second monitoring time window is configured within the first monitoring time window.

3. The method according to claim 1, wherein the first indication is used to indicate at least one of the following:
first duration;
N target channel or signal monitoring occasions that the terminal does not monitor, wherein N is an integer greater than or equal to 0;
a target channel or signal monitoring occasion that the terminal needs to monitor;
whether the terminal is to be woken up for PDCCH monitoring;
a start moment of monitoring a PDCCH by the terminal;
an end moment of monitoring a PDCCH by the terminal;
duration of monitoring a PDCCH by the terminal;
whether the terminal is to receive a CSI-RS;
a start moment of receiving the CSI-RS by the terminal;
an end moment of receiving the CSI-RS by the terminal;
duration of receiving the CSI-RS by the terminal;
whether the terminal is to report CSI;
a start moment of reporting the CSI by the terminal;
an end moment of reporting the CSI by the terminal; and
duration of reporting the CSI by the terminal.

4. The method according to claim 3, wherein in a case that the first indication is used to indicate the first duration, monitoring, by the terminal, the target channel or signal monitoring occasion based on the first indication comprises at least one of the following:
skipping monitoring, by the terminal, a target channel or signal monitoring occasion that fully overlaps the first duration;
skipping monitoring, by the terminal, a target channel or signal monitoring occasion that partially overlaps the first duration; and
resuming, by the terminal, monitoring of a target channel or signal monitoring occasion after the first duration ends.

5. The method according to claim 3 or 4, wherein in a case that the first indication is used to indicate the first duration, monitoring, by the terminal, a PDCCH based on the first indication comprises at least one of the following:
skipping monitoring, by the terminal, a PDCCH that fully overlaps the first duration;
skipping monitoring, by the terminal, a PDCCH that partially overlaps the first duration; and
starting or resuming, by the terminal, PDCCH monitoring after the first duration ends.

6. The method according to claim 5, wherein the starting or resuming, by the terminal, PDCCH monitoring after the first duration ends comprises:
starting or resuming, by the terminal, PDCCH monitoring by starting a DRX on-duration timer or a DRX inactivity timer, wherein
a start moment of the DRX on-duration timer is an end moment of a first time unit to which an end moment of the first duration belongs, and/or the start moment of the DRX on-duration timer is a start moment of a corresponding DRX cycle.

7. The method according to claim 6, wherein in a case that the DRX on-duration timer is started, the method further comprises:
canceling starting a DRX on-duration timer other than the DRX on-duration timer within a first time range.

8. The method according to claim 3, wherein in a case that the first indication is used to indicate the N target channel or signal monitoring occasions that the terminal does not monitor, monitoring, by the terminal, the target channel or signal monitoring occasion based on the first indication comprises:
skipping monitoring, by the terminal, the N target channel or signal monitoring occasions after a first moment, wherein the first moment is a moment at which the terminal completes reception of the first indication, or an end moment of a target channel or signal monitoring occasion on which the terminal completes reception of the first indication.

9. The method according to claim 8, wherein after the skipping monitoring the N target channel or signal monitoring occasions, the method further comprises:
resuming, by the terminal, monitoring of a target channel or signal monitoring occasion.

10. The method according to claim 3, wherein in a case that the first indication is used to indicate the target channel or signal monitoring occasion that the terminal needs to monitor, monitoring, by the terminal, the target channel or signal monitoring occasion based on the first indication comprises:
monitoring, by the terminal, the target channel or signal monitoring occasion that the terminal needs to monitor.

11. The method according to claim 3, wherein in a case that the first indication is used to indicate any one of the start moment and/or the end moment of monitoring the PDCCH and the duration of monitoring the PDCCH, monitoring, by the terminal, the PDCCH based on the first indication comprises:
monitoring the PDCCH within target monitoring duration, wherein
the target monitoring duration is determined based on any one of the start moment and/or the end moment of monitoring the PDCCH and the duration of monitoring the PDCCH.

12. The method according to claim 11, wherein in a case that the first indication is used to indicate any one of the start moment and/or the end moment of monitoring the PDCCH and the duration of monitoring the PDCCH, monitoring, by the terminal, the target channel or signal monitoring occasion based on the first indication comprises:
skipping monitoring the target channel or signal monitoring occasion within the target monitoring duration.

13. The method according to claim 1, wherein monitoring, by the terminal, the target channel or signal monitoring occasion based on the first indication comprises:
in a case that the first indication indicates a first specific value, skipping monitoring a first target channel or signal monitoring occasion, wherein
the first target channel or signal monitoring occasion is a target channel or signal monitoring occasion within a first monitoring time window and located after a reception moment of the first indication.

14. The method according to claim 1 or 13, wherein monitoring, by the terminal, a PDCCH based on the first indication comprises:
in a case that the first indication indicates a second specific value, starting or resuming, by the terminal, PDCCH monitoring after the first indication is received.

15. The method according to claim 14, wherein the starting or resuming, by the terminal, PDCCH monitoring after the first indication is received comprises:
starting or resuming, by the terminal, PDCCH monitoring by starting a DRX on-duration timer or a DRX inactivity timer, wherein
a start moment of the DRX on-duration timer is an end moment of a first time unit to which an end moment of a first duration belongs, and/or the start moment of the DRX on-duration timer is a start moment of a corresponding DRX cycle.

16. The method according to claim 15, wherein in a case that the DRX on-duration timer is started, the method further comprises:
canceling starting a DRX on-duration timer other than the DRX on-duration timer within a second time range.

17. The method according to any one of claims 1 to 16, wherein before the performing, by the terminal, a predetermined behavior based on the first indication, the method further comprises any one of the following:
in a case that the terminal detects a wake-up indication, ignoring the first indication; and
in a case that the terminal detects a wake-up indication, ignoring the first indication, and skipping monitoring all target channel or signal monitoring occasions after the wake-up indication is received.

18. A transmission processing method, comprising:
transmitting, by a network device, a first indication on at least one target channel or signal monitoring occasion, wherein
the first indication is used to indicate a terminal to perform a predetermined behavior, and the predetermined behavior comprises at least one of monitoring a wake-up signal monitoring occasion or a target channel or signal monitoring occasion, monitoring a physical downlink control channel PDCCH, measuring a channel state information-reference signal CSI-RS, and reporting CSI.

19. The method according to claim 18, wherein before the transmitting a first indication on at least one target channel or signal monitoring occasion, the method further comprises:
transmitting, by the network device, configuration information to the terminal, wherein the configuration information is used by the terminal to configure at least one of the following:
a first monitoring time window, wherein configuration of the first monitoring time window is related to at least one of a service cycle, a jitter range of a service packet, a discontinuous reception DRX cycle, a DRX start moment, and DRX on-duration;
the at least one target channel or signal monitoring occasion, wherein the at least one target channel or signal monitoring occasion is configured within the first monitoring time window;
a type of the at least one target channel or signal monitoring occasion, wherein different types of the at least one target channel or signal monitoring occasion are associated with different service types, and/or different types of the at least one target channel or signal monitoring occasion are associated with different predetermined behaviors; and
at least one second monitoring time window, wherein the at least one second monitoring time window is configured within the first monitoring time window.

20. The method according to claim 18, wherein the first indication is used to indicate at least one of the following:
first duration;
N target channel or signal monitoring occasions that the terminal does not monitor, wherein N is an integer greater than or equal to 0;
a target channel or signal monitoring occasion that the terminal needs to monitor;
whether the terminal is to be woken up for PDCCH monitoring;
a start moment of monitoring a PDCCH by the terminal;
an end moment of monitoring a PDCCH by the terminal;
duration of monitoring a PDCCH by the terminal;
whether the terminal is to receive a CSI-RS;
a start moment of receiving the CSI-RS by the terminal;
an end moment of receiving the CSI-RS by the terminal;
duration of receiving the CSI-RS by the terminal;
whether the terminal is to report CSI;
a start moment of reporting the CSI by the terminal;
an end moment of reporting the CSI by the terminal; and
duration of reporting the CSI by the terminal.

21. A transmission processing apparatus, applied to a terminal, wherein the apparatus comprises:
a monitoring module, configured to: in a non-physical downlink control channel PDCCH monitoring period, monitor a first indication on at least one target channel or signal monitoring occasion; and
an execution module, configured to perform a predetermined behavior based on the first indication, wherein the predetermined behavior comprises at least one of monitoring a wake-up signal monitoring occasion or a target channel or signal monitoring occasion, monitoring a PDCCH, measuring a channel state information-reference signal CSI-RS, and reporting CSI.

22. The apparatus according to claim 21, wherein the monitoring module is further configured to obtain configuration information, wherein the configuration information is used to configure at least one of the following:
a first monitoring time window, wherein configuration of the first monitoring time window is related to at least one of a service cycle, a jitter range of a service packet, a discontinuous reception DRX cycle, a DRX start moment, and DRX on-duration;
the at least one target channel or signal monitoring occasion, wherein the at least one target channel or signal monitoring occasion is configured within the first monitoring time window;
a type of the at least one target channel or signal monitoring occasion, wherein different types of the at least one target channel or signal monitoring occasion are associated with different service types, and/or different types of the at least one target channel or signal monitoring occasion are associated with different predetermined behaviors; and
at least one second monitoring time window, wherein the at least one second monitoring time window is configured within the first monitoring time window.

23. The apparatus according to claim 21, wherein the first indication is used to indicate at least one of the following:
first duration;
N target channel or signal monitoring occasions that the terminal does not monitor, wherein N is an integer greater than or equal to 0;
a target channel or signal monitoring occasion that the terminal needs to monitor;
whether the terminal is to be woken up for PDCCH monitoring;
a start moment of monitoring a PDCCH by the terminal;
an end moment of monitoring a PDCCH by the terminal;
duration of monitoring a PDCCH by the terminal;
whether the terminal is to receive a CSI-RS;
a start moment of receiving the CSI-RS by the terminal;
an end moment of receiving the CSI-RS by the terminal;
duration of receiving the CSI-RS by the terminal;
whether the terminal is to report CSI;
a start moment of reporting the CSI by the terminal;
an end moment of reporting the CSI by the terminal; and
duration of reporting the CSI by the terminal.

24. The apparatus according to claim 23, wherein in a case that the first indication is used to indicate the first duration, the execution module is configured to perform at least one of the following:
skipping monitoring, for the terminal, a target channel or signal monitoring occasion that fully overlaps the first duration;
skipping monitoring, for the terminal, a target channel or signal monitoring occasion that partially overlaps the first duration; and
resuming, for the terminal, monitoring of a target channel or signal monitoring occasion after the first duration ends.

25. The apparatus according to claim 23 or 24, wherein in a case that the first indication is used to indicate the first duration, the execution module is configured to perform at least one of the following:
skipping monitoring, for the terminal, a PDCCH that fully overlaps the first duration;
skipping monitoring, for the terminal, a PDCCH that partially overlaps the first duration; and
starting or resuming, for the terminal, PDCCH monitoring after the first duration ends.

26. The apparatus according to claim 25, wherein the execution module is configured to start or resume PDCCH monitoring by starting a DRX on-duration timer or a DRX inactivity timer, wherein
a start moment of the DRX on-duration timer is an end moment of a first time unit to which an end moment of the first duration belongs, and/or the start moment of the DRX on-duration timer is a start moment of a corresponding DRX cycle.

27. The apparatus according to claim 26, wherein in a case that the DRX on-duration timer is started, the execution module is further configured to cancel starting a DRX on-duration timer other than the DRX on-duration timer within a first time range.

28. The apparatus according to claim 23, wherein in a case that the first indication is used to indicate the N target channel or signal monitoring occasions that the terminal does not monitor, the execution module is configured to perform at least one of the following:
skipping monitoring the N target channel or signal monitoring occasions after a first moment, wherein the first moment is a moment at which the terminal completes reception of the first indication, or an end moment of a target channel or signal monitoring occasion on which the terminal completes reception of the first indication.

29. The apparatus according to claim 28, wherein after skipping monitoring the N target channel or signal monitoring occasions, the execution module is further configured to resume monitoring of a target channel or signal monitoring occasion.

30. The apparatus according to claim 23, wherein in a case that the first indication is used to indicate the target channel or signal monitoring occasion that the terminal needs to monitor, the execution module is configured to monitor the target channel or signal monitoring occasion that the terminal needs to monitor.

31. The apparatus according to claim 23, wherein in a case that the first indication is used to indicate any one of the start moment and/or the end moment of monitoring the PDCCH and the duration of monitoring the PDCCH, the execution module is configured to monitor the PDCCH within target monitoring duration, wherein
the target monitoring duration is determined based on any one of the start moment and/or the end moment of monitoring the PDCCH and the duration of monitoring the PDCCH.

32. The apparatus according to claim 31, wherein in a case that the first indication is used to indicate any one of the start moment and/or the end moment of monitoring the PDCCH and the duration of monitoring the PDCCH, the execution module is configured to skip monitoring the target channel or signal monitoring occasion within the target monitoring duration.

33. The apparatus according to claim 21, wherein the execution module is further configured to: in a case that the first indication indicates a first specific value, skip monitoring a first target channel or signal monitoring occasion, wherein
the first target channel or signal monitoring occasion is a target channel or signal monitoring occasion within a first monitoring time window and located after a reception moment of the first indication.

34. The apparatus according to claim 21 or 33, wherein the execution module is further configured to:
in a case that the first indication indicates a second specific value, start or resume, for the terminal, PDCCH monitoring after the first indication is received.

35. The apparatus according to claim 34, wherein the execution module is configured to start or resume PDCCH monitoring by starting a DRX on-duration timer or a DRX inactivity timer, wherein
a start moment of the DRX on-duration timer is an end moment of a first time unit to which an end moment of a first duration belongs, and/or the start moment of the DRX on-duration timer is a start moment of a corresponding DRX cycle.

36. The apparatus according to claim 35, wherein in a case that the DRX on-duration timer is started, the execution module is further configured to:
cancel starting a DRX on-duration timer other than the DRX on-duration timer within a second time range.

37. The apparatus according to any one of claims 21 to 36, wherein the execution module is further configured to perform any one of the following:
in a case that the terminal detects a wake-up indication, ignoring the first indication; and
in a case that the terminal detects a wake-up indication, ignoring the first indication, and skipping monitoring all target channel or signal monitoring occasions after the wake-up indication is received.

38. A transmission processing apparatus, applied to a network device, wherein the apparatus comprises:
a transmitting module, configured to transmit a first indication on at least one target channel or signal monitoring occasion, wherein
the first indication is used to indicate a terminal to perform a predetermined behavior, and the predetermined behavior comprises at least one of monitoring a wake-up signal monitoring occasion or a target channel or signal monitoring occasion, monitoring a physical downlink control channel PDCCH, measuring a channel state information-reference signal CSI-RS, and reporting CSI.

39. The apparatus according to claim 38, wherein the transmitting module is further configured to transmit configuration information to the terminal, wherein the configuration information is used by the terminal to configure at least one of the following:
a first monitoring time window, wherein configuration of the first monitoring time window is related to at least one of a service cycle, a jitter range of a service packet, a discontinuous reception DRX cycle, a DRX start moment, and DRX on-duration;
the at least one target channel or signal monitoring occasion, wherein the at least one target channel or signal monitoring occasion is configured within the first monitoring time window;
a type of the at least one target channel or signal monitoring occasion, wherein different types of the at least one target channel or signal monitoring occasion are associated with different service types, and/or different types of the at least one target channel or signal monitoring occasion are associated with different predetermined behaviors; and
at least one second monitoring time window, wherein the at least one second monitoring time window is configured within the first monitoring time window.

40. The apparatus according to claim 38, wherein the first indication is used to indicate at least one of the following:
first duration;
N target channel or signal monitoring occasions that the terminal does not monitor, wherein N is an integer greater than or equal to 0;
a target channel or signal monitoring occasion that the terminal needs to monitor;
whether the terminal is to be woken up for PDCCH monitoring;
a start moment of monitoring a PDCCH by the terminal;
an end moment of monitoring a PDCCH by the terminal;
duration of monitoring a PDCCH by the terminal;
whether the terminal is to receive a CSI-RS;
a start moment of receiving the CSI-RS by the terminal;
an end moment of receiving the CSI-RS by the terminal;
duration of receiving the CSI-RS by the terminal;
whether the terminal is to report CSI;
a start moment of reporting the CSI by the terminal;
an end moment of reporting the CSI by the terminal; and
duration of reporting the CSI by the terminal.

41. A terminal, comprising a processor, a memory, and a program or instructions stored in the memory and executable on the processor, wherein when the program or instructions are executed by the processor, steps of the transmission processing method according to any one of claims 1 to 17 are implemented.

42. A network device, comprising a processor, a memory, and a program or instructions stored in the memory and executable on the processor, wherein when the program or instructions are executed by the processor, steps of the transmission processing method according to any one of claims 18 to 20 are implemented.

43. A readable storage medium, wherein the readable storage medium stores a program or instructions, and when the program or instructions are executed by a processor, steps of the transmission processing method according to any one of claims 1 to 17 is implemented, or steps of the transmission processing method according to any one of claims 18 to 20 are implemented.
